# FASCICULE DE BREVET EUROPEEN

(11) **EP 0 545 749 B1**
(45) Date de publication et mention de la délivrance du brevet: **27.12.1995**
(21) Numéro de dépôt: 92402989.5
(22) Date de dépôt: 05.11.1992
(51) Int. Cl.: F16H 61/02

(54) **Procédé de détermination des rapports de boîte de vitesses d'un véhicule**
Verfahren zur Bestimmung der Getriebegänge eines Fahrzeugs
Method for determining gear ratios in a gear box of a vehicle

(30) Priorité: 06.12.1991 FR 9115154
(43) Date de publication de la demande: 09.06.1993
(73) Titulaire: AUTOMOBILES PEUGEOT, 75116 Paris (FR); AUTOMOBILES CITROEN, 92200 Neuilly-sur-Seine (FR)
(72) Inventeur: Delos, Didier, F-92240 Malakoff (FR); Gabriel, Hervé, F-60200 Compiegne (FR); Souhaite, Philippe, F-78180 Montigny le Bretonneux (FR)
(74) Mandataire: Pinchon, Odile

(56) Documents cités:
- EP-A- 0 406 712
- DE-A- 3 138 715
- US-A- 4 803 898

## Description

La présente invention concerne un procédé de détermination des rapports de boîte de vitesses d'un véhicule à l'aide d'un calculateur électronique pour des applications multiples, telle que par exemple le contrôle moteur par exploitation du rapport engagé.

Il est connu par la demande de brevet européen EP-A-0 406 712 un dispositif et un procédé de mesure du rapport de boîte de vitesses engagé dans lequel, pour tenir compte du patinage des roues, la vitesse de rotation des roues est prélevée par un capteur disposé sur chaque roue et un signal de valeur moyenne est ainsi élaboré. Cette valeur moyenne est ensuite divisée par une valeur représentant le régime moteur. Le quotient ainsi obtenu est comparé à des plages de valeur pour déterminer la valeur de la vitesse engagée.

Un tel procédé de détermination de vitesse engagée n'est valable que dans la mesure où l'ensemble moteur-transmission est accouplé et la qualité de son fonctionnement dépend donc des caractéristiques de l'utilisateur et de sa façon de changer les vitesses.

Le but de l'invention est de déterminer en temps réel le rapport de boîte de vitesses engagé tout en tenant compte des phases transitoires correspondant à des changements de vitesse dont la durée peut être différente d'un utilisateur à un autre. Le but de l'invention est donc d'éliminer les problèmes de transition tout en ayant le plus rapidement possible le rapport engagé tout en tenant compte des spécificités du conducteur.

Ce premier but est atteint par le procédé de détermination de rapport de boîte de vitesses tel que revendiqué dans la revendication 1.

Le procédé comprend une étape de mémorisation de la dernière valeur du rapport de boîte de vitesses théorique (BVTH0).

Selon une particularité, l'intervalle de temps programmé correspond à un premier intervalle (tempo-BVPL) représentant une temporisation correspondant à la position du papillon lorsque le pied est levé.

Selon une autre particularité, l'intervalle de temps programmé correspond à un deuxième intervalle (tempo-BVUT) qui représente une temporisation correspondant à la position du papillon lorsque le pied n'est pas levé.

Selon une autre particularité, la valeur (BVB0) correspond à la valeur du rapport de boîte de vitesses brut déterminé et mémorisé lors de la détermination précédente.

Selon une autre particularité, le procédé consiste :
- à utiliser un signal électrique généré par un capteur, de fréquence proportionnelle à la vitesse du véhicule,
- à incrémenter un compteur à l'aide des fronts montants et descendants de ce signal,
- à déterminer par un deuxième capteur disposé sur la couronne du moteur les passages du moteur au point mort haut (PMH);
- à prélever la valeur du compteur à chaque passage au point mort haut ;
- à mémoriser la valeur ainsi prélevée ;
- à réitérer les opérations précédentes ; et
- à déterminer le rapport (VSN) de la vitesse du véhicule sur le régime moteur comme étant la différence entre la valeur prélevée lors de la dernière itération et la valeur mémorisée à un certain nombre de points morts hauts précédents.

D'autres caractéristiques et avantages de la présente invention apparaîtront plus clairement à la lecture de la description ci-après faite en référence aux dessins annexés dans lesquels :
- la figure 1 représente une vue schématique des différentes étapes du processus de détermination du rapport de boîte de vitesses ;
- la figure 2 représente l'organigramme du calcul du rapport de boîte de vitesses brut ;
- la figure 3 représente l'organigramme de détermination du rapport de boîte de vitesses brut ;
- la figure 4 représente l'organigramme du processus de détermination du rapport de boîte de vitesses théorique ;
- la figure 5 représente l'organigramme du processus de détermination du rapport de boîte de vitesses probable ;
- la figure 6 représente une vue schématique du dispositif permettant la mise en oeuvre du procédé.

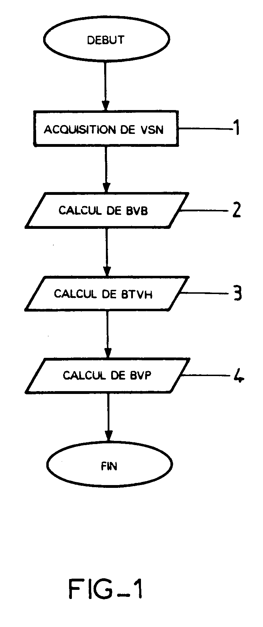

Le procédé de l'invention permet, comme représenté à la figure 1, d'acquérir dans une première étape (1) une valeur VSN représentative du rapport de la vitesse du véhicule sur le régime du moteur. Cette valeur VSN est élaborée à partir des informations générées par un capteur électrique à effet hall placé sur l'arbre de la boîte de vitesses. Ce capteur délivre un signal logique dont la fréquence est proportionnelle à la vitesse du véhicule. Les fronts montants et descendants du signal logique incrémentent un compteur logiciel dont la valeur est acquise à chaque point mort haut (PMH) détecté par la reconnaissance d'une singularité du signal issu d'un deuxième capteur situé à proximité de la couronne du moteur. Le rapport vitesse/régime est déterminé à chaque demi-tour moteur en effectuant la différence entre la valeur du compteur et la valeur du compteur prise un nombre Z de points morts hauts précédents de façon à avoir une valeur de (VSN) permettant de distinguer chacun des rapports de boîte. Ainsi, dans le cas où Z est égal à huit, (VSN) est égal à la différence entre la valeur actuelle du compteur et la valeur du compteur acquise huit points morts hauts avant.

L'étape suivante (2) du processus consiste à déterminer le rapport de boîte de vitesses brut (BVB), puis, une fois ce rapport de boîte de vitesses brut calculé et mémorisé, le processus passe à l'étape suivante (3) qui est une étape de calcul du rapport de boîte de vitesses théorique (BVTH).

Enfin, le procédé se termine par une étape (4) de calcul du rapport de boîte de vitesses probable (BVP).

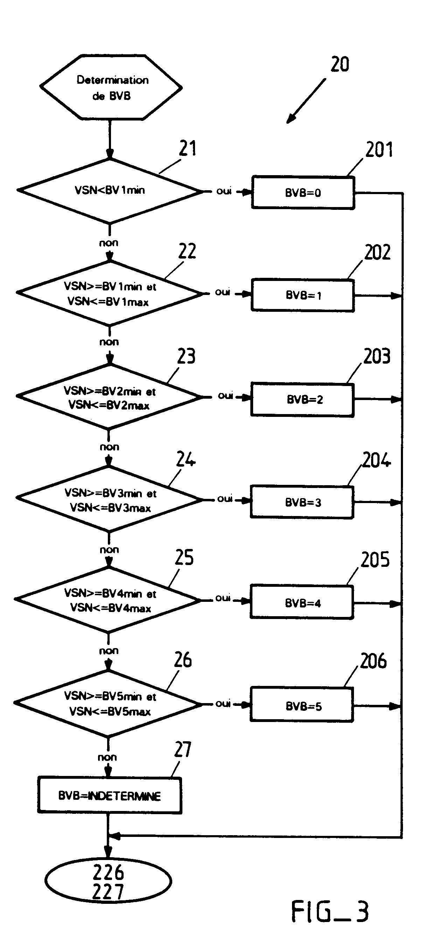

En début de procédé, la détermination du rapport de boîte de vitesses brut s'effectue selon l'organigramme de la figure 3, lequel comporte une première étape (21) de comparaison de la valeur (VSN) obtenue par le calcul précédent avec une valeur limite (BV1-min). Si la valeur (VSN) est inférieure strictement, le système détermine que le rapport de vitesse est le rapport "0", comme représenté à l'étape (201). Si la valeur (VSN) n'est pas inférieure strictement mais supérieure ou égale à cette valeur (BV1-min), et inférieure ou égale à une valeur (BV1-max), l'étape de comparaison (22) permet dans le cas d'une telle détermination, de décider que le rapport de boîte de vitesses brut est égal à "1", comme représenté à l'étape (202). Dans le cas où (VSN) n'est pas encadré à l'étape (22), on regarde si (VSN) est supérieure ou égale à une valeur (BV2-min) et inférieure ou égale à une valeur (BV2-max) à l'étape de comparaison (23). Dans l'affirmative, le rapport de boîte de vitesses brut est estimé être égal à "2", comme représenté à l'étape (203). Dans la négative, on établit une comparaison à l'étape (24) entre un troisième couple de valeurs (BV3-min) et (BV3-max). Si le résultat de cette comparaison est affirmatif, le rapport de boîte de vitesses brut est déterminé être égal à "3" et dans le cas négatif, on passe à l'étape de comparaison (25) suivante dans laquelle (VSN) est comparée à un quatrième couple de valeur (BV4-min, BV4-max). Enfin on termine par une dernière étape de comparaison (26) avec un cinquième couple de valeur (BV5-min et BV5-max). Dans le cas où cette comparaison avec le cinquième couple est encore négative, on en tire la conclusion que le rapport de boîte de vitesses brut est indéterminé à l'étape (27), sinon le procédé retient le rapport de boîte de vitesses brut qui aura été déterminé par l'une des étapes (201 à 206).

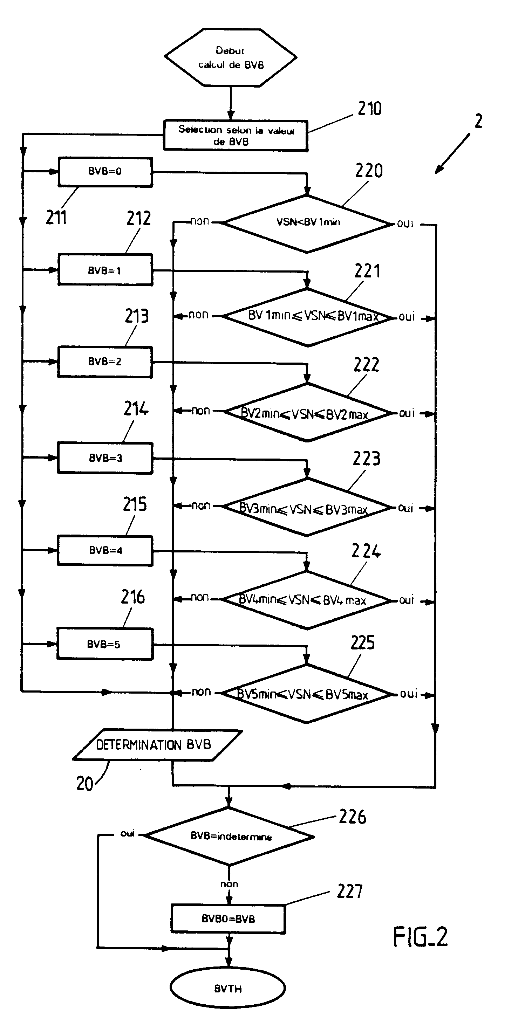

La figure 2 représente la détermination du rapport de boîte de vitesses brut dans le cas où une première phase de détermination de ce rapport selon la figure 3 a permis de déterminer un rapport antérieur, ce qui permet, par exemple dans le cas où le rapport antérieur avait été déterminé comme étant le troisième rapport représenté à l'étape (214), d'effectuer directement à l'étape (223) la comparaison de (VSN) avec les valeurs (BV3-min et BV3-max), ce qui permet d'éviter les comparaisons avec les bornes de valeur inférieure et d'accélérer ainsi le cycle de détermination du rapport de boîte de vitesses brut. Si cette comparaison à l'étape (223) est affirmative, le rapport est déterminé et le processus répond "non" à la question de l'étape (226) "BVB est-il indéterminé ?" et mémorise dans une mémoire (BVB0) la valeur (BVB) déterminée. Dans le cas où la comparaison à l'étape (223) est négative, on fait appel à la routine (20) de détermination de (BVB) représentée à la figure 3. Une fois cette routine mise en oeuvre, on effectue le test (226) pour savoir si (BVB) est déterminé. Dans l'affirmative, on passe à la détermination de (BVTH) et dans la négative, on mémorise à l'étape (227) la valeur déterminée dans la mémoire (BVB0) avant de passer à la détermination de (BVTH). Le cycle de détermination (BVB) ainsi obtenu permet, après une première détermination de (BVB0), d'accélérer les déterminations ultérieures en simplifiant celles-ci par un contrôle du maintien de la valeur (VSN) dans la fourchette correspondant au rapport de boîte.

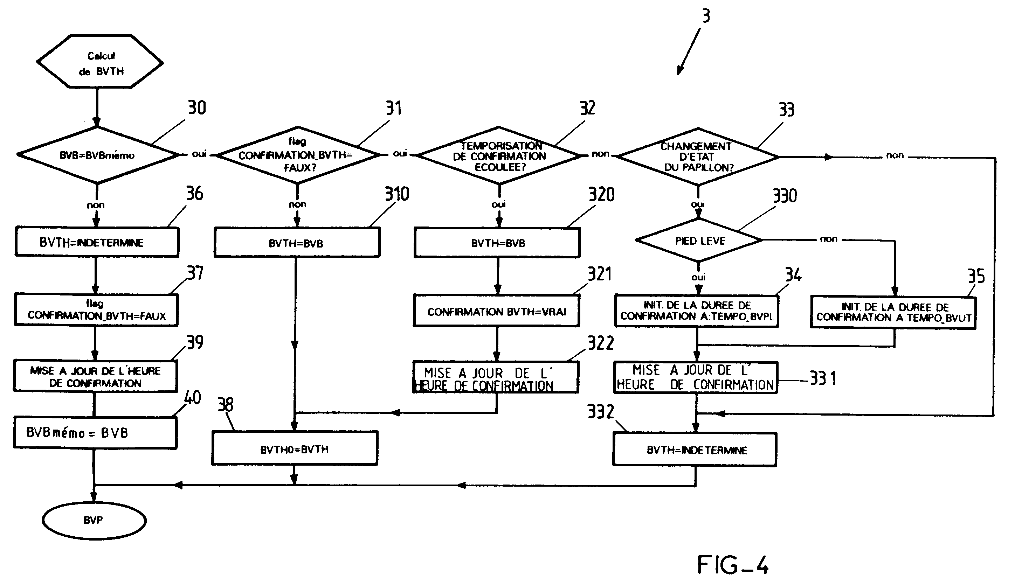

Ensuite le procédé se poursuit par le calcul de (BVTH). Ce calcul, représenté à la figure 4, commence par une étape de comparaison (30) au cours de laquelle on examine si la valeur de rapport de boîte de vitesses brut (BVB) est égale à la valeur du rapport de boîte de vitesses brut mémorisée (BVB mémo), dans la négative le programme en conclut, à l'étape (36), que le rapport de boîte de vitesses théorique (BVTH) est indéterminé et positionne à l'état faux, comme représenté par l'étape (37), un drapeau de confirmation du rapport de boîte de vitesses théorique pour terminer, à l'étape (39), par une mise à jour de l'heure de confirmation et, à l'étape (40), par une mise à jour de (BVB mémo). Dans le cas où la comparaison de l'étape (30) est affirmative, le programme examine, à l'étape (31), si le drapeau de confirmation de (BVTH) est à l'état faux. Dans la négative, le programme détermine, à l'étape (310), que le rapport de boîte de vitesses théorique est égal au rapport de boîte de vitesses brut que l'on vient de calculer. Puis, à l'étape (38), on mémorise en (BVTH0) ce rapport de boîte de vitesses théorique obtenu. Dans l'affirmative à l'étape (31), on examine à l'étape (32) suivante si la temporisation de confirmation s'est écoulée. Dans l'affirmative, on mémorise à l'étape (320) que le rapport de boîte de vitesses théorique (BVTH) est égal au rapport de boîte de vitesses brut (BVB) qui est resté constant pendant la temporisation malgré le fait que le drapeau de confirmation était faux. A ce moment-là, à l'étape (321), on positionne à l'état vrai le drapeau de confirmation du rapport de boîte de vitesses théorique (BVTH). En même temps, à l'étape (322) on met à jour l'heure de confirmation. On passe ensuite à l'étape (38) de mémorisation en BVTHO du rapport de vitesse théorique (BVTH) ainsi obtenu dans cette branche.

Ainsi l'on comprend qu'après avoir déterminé (BVB) et après avoir comparé cette valeur à la valeur mémorisée à l'étape (30), soit les valeurs sont identiques, auquel cas on regarde si le drapeau de confirmation est faux, ce qui indique qu'à l'étape précédente il y avait eu une indétermination sur (BVTH) et dans ce cas on attend que la temporisation soit écoulée et que (BVB) soit resté constant pendant cette temporisation pour fixer (BVTH) à la valeur (BVB) qui est restée constante. Dans le cas où le drapeau de confirmation est vrai, la valeur obtenue à l'étape (30) est immédiatement prise en compte comme valeur de rapport théorique à l'étape (310). Donc, tant que les valeurs de rapport brut restent constantes et identiques à la valeur mémorisée au calcul précédent, les valeurs de rapport théorique sont immédiatement déterminées alors que dès qu'une variation se produit, la valeur théorique devient indéterminée et l'on doit attendre une temporisation et le maintien pendant cette temporisation de la valeur brute pour déterminer la valeur du rapport de boîte de vitesses théorique.

Ainsi l'algorithme du calcul de (BVTH) consiste à contrôler que le rapport brut (BVB) ne change pas de valeur pendant un temps programmé qui peut prendre deux valeurs, une première valeur (tempo-BVPL), temporisation de papillon en position pied levé, et une deuxième valeur (tempo-BVUT), temporisation de papillon en position pied non levé.

Ainsi, comme on peut le voir sur l'organigramme de la figure 4, lorsque le test de la temporisation de confirmation écoulée est négatif, le programme se poursuit par un test de changement d'état du papillon, représenté à l'étape (33). Dans la négative, il n'y a aucune raison de modifier la temporisation qui est en cours d'écoulement et on passe directement à l'étape (332) qui mémorise le fait que le rapport de boîte de vitesses théorique est indéterminé. Par contre, dans l'affirmative, on effectue le test représenté à l'étape (330) pour déterminer si le pied est levé.

Le test de changement d'état du papillon et le test de pied levé sont effectués en venant lire le signal fourni par un capteur de position du papillon constitué, par exemple, par un potentiomètre. La position pied levé correspondra à une valeur de ce signal, valeur qui sera acquise au cours d'une phase d'apprentissage.

Dans le cas où le test de pied levé est négatif, ceci veut dire qu'il y a eu changement d'état du papillon et que l'accélérateur n'est pas en position pied levé. Par conséquent, le procédé initialise la durée de la temporisation de confirmation à la valeur (tempo-BVUT), comme représenté à l'étape (35). Dans le cas où le test de pied levé est affirmatif, ceci veut dire qu'il y a eu changement d'état de papillon et que le pied a été levé et par conséquent le programme initialise la durée de la temporisation de confirmation à la valeur (tempo-BVPL), comme représenté à l'étape (34). Dans les deux cas, une fois l'initialisation effectuée, on met à jour l'heure de confirmation du rapport de boîte de vitesses brut, comme représenté à l'étape (331). Ensuite le programme mémorise que la valeur de rapport théorique est indéterminée et poursuit par l'étape de calcul de (BVP).

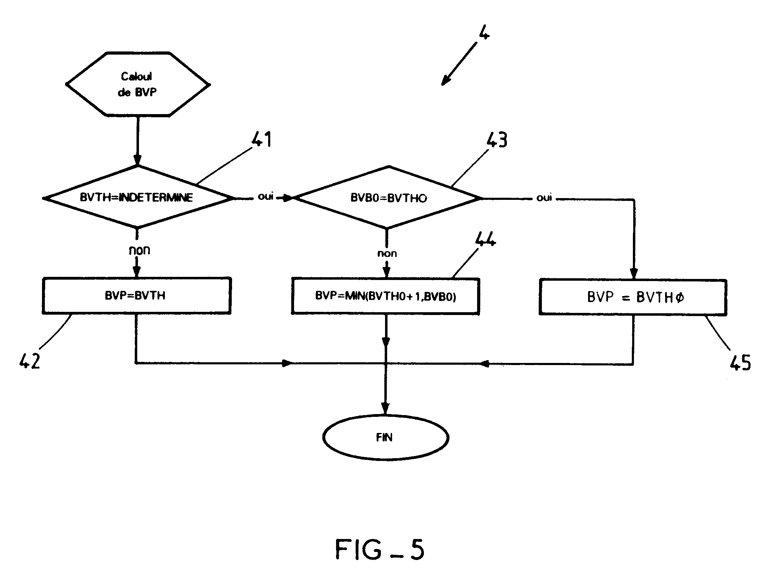

Cette étape de calcul de (BVP) est représentée en détail à la figure 5. Au cours de celle-ci on effectue un test, représenté à l'étape (41), pour déterminer si le rapport de vitesse théorique est indéterminé. Dans le cas où celui-ci est déterminé, le rapport de boîte de vitesses probable (BVP) est identifié au rapport de boîte de vitesses théorique (BVTH), comme représenté à l'étape (42). Dans l'affirmative, un test représenté par l'étape (43) est effectué dans lequel on compare la valeur de rapport de boîte de vitesses brut mémorisée (BVB0) à la valeur de rapport de boîte de vitesses théorique mémorisée (BVTH0). Si les deux valeurs sont identiques, elles sont prises comme valeur de rapport de boîte de vitesses probable (BVP), comme représenté à l'étape (45) et dans la négative, (BVP) est constitué par le minimum de la valeur (BVB0) et de la valeur de rapport théorique mémorisée (BVTHO) augmentée d'une unité (BVTH0 + 1). Enfin, le programme s'arrête en attendant le demi-tour suivant. La vitesse de calcul du dispositif est telle que l'ensemble des étapes (1, 2, 3, 4) est effectuée en un temps inférieur au temps nécessaire au moteur pour effectuer un demi-tour. Ainsi à chaque demi-tour on effectue l'acquisition de (VSN), le calcul de (BVB), la détermination de (BVTH) en passant soit par le test (30) soit par les tests (30 et 31), soit par les tests (30, 31 et 32), soit par les tests (30, 31, 32, 33), selon les états des informations mémorisées ou des capteurs auxquels le dispositif se réfère. On termine ensuite par le calcul de (BVP) en passant soit par le test (41), soit par les tests (41 et 43).

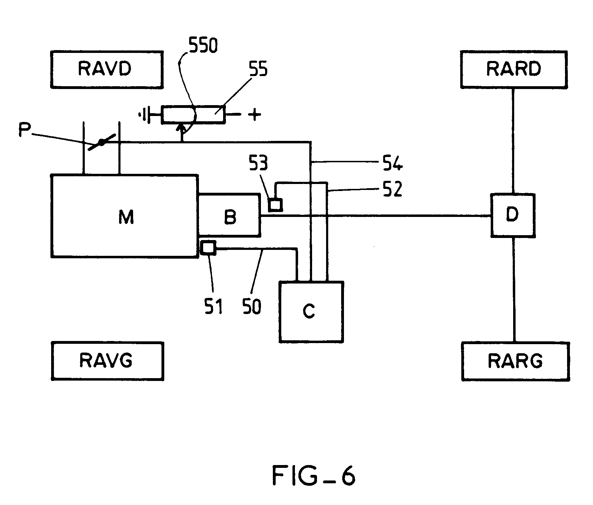

La figure 6 représente un dispositif permettant la mise en oeuvre du procédé de l'invention. Ce dispositif comporte un calculateur (C), associé avec les mémoires et le programme nécessaire au fonctionnement selon le procédé de l'invention, mémorisé dans ces mémoires. Ce calculateur (C) est relié par une liaison (50) à un premier capteur (51) qui permet de déterminer la position du point mort haut (PMH) disposé à proximité de la couronne du moteur (M). Ce calculateur (C) est également relié par une liaison (52) à un deuxième capteur (53), disposé à proximité de l'arbre de la boîte de vitesses (B). Enfin une quatrième liaison (54) est reliée au curseur (550) d'un potentiomètre (55) dont le curseur est relié mécaniquement au papillon (P) de commande de l'admission d'air du moteur.

L'avantage du procédé mis en oeuvre par le dispositif de l'invention est de permettre une détermination rapide du rapport de boîte de vitesses probable en s'affranchissant des phases transitoires, de façon à permettre la détection de l'instant d'un changement de rapport et d'estimer la prochaine vitesse enclenchée avant la fin du ré-attelage moteur transmission. Les différentes données issues de ce calcul pourront être prises en compte, par exemple, dans des stratégies de contrôle moteur nouvelles ou déjà existantes, de façon à agir sur l'agrément de conduite des véhicules. Ainsi on pourra utiliser les résultats dans les stratégies de réduction des à coups de l'ensemble moteur transmission lors des accélérations et décélérations.

## Revendications

1. Procédé de détermination de rapport de boîte de vitesses d'un véhicule consistant :
- à déterminer une valeur (VSN) représentant le rapport de la vitesse du véhicule sur le régime du moteur;
- à comparer la valeur (VSN) ainsi obtenue à des couples de valeur limites (BVN min) pour la valeur minimale et (BVN max) pour la valeur maximale associés chacun à une valeur N de rapport de boîte de vitesses pour déterminer le rapport de boîte de vitesses brut utilisé (BVB) ;
- à déterminer le rapport de boîte de vitesses théorique (BVTH) en contrôlant que le rapport de boîte de vitesses brut (BVB) déterminé à une étape précédente, ne change pas de valeur pendant un intervalle de temps programmé; et
- à déterminer le rapport de boîte de vitesses probable (BVP) en prenant pour valeur celle du rapport théorique (BVTH) lorsque celui-ci est déterminé et invariant pendant le temps programmé ou la valeur minimum de (BVBO) et de la valeur théorique (BVTHO augmentée d'une unité, c'est-à-dire (BVTHO + 1).

2. Procédé selon la revendication 1, caractérisé en ce qu'il comprend une étape de mémorisation de la dernière valeur du rapport de boîte de vitesses théorique (BVTH0).

3. Procédé selon la revendication 1, caractérisé en ce que l'intervalle de temps programmé correspond à un premier intervalle (tempo-BVPL) représentant une temporisation correspondant à la position du papillon lorsque le pied est levé.

4. Procédé selon la revendication 1, caractérisé en ce que l'intervalle de temps programmé correspond à un deuxième intervalle (tempo-BVUT) qui représente une temporisation correspondant à la position du papillon lorsque le pied n'est pas levé.

5. Procédé selon la revendication 1, caractérisé en ce que la valeur (BVB0) correspond à la valeur du rapport de boîte de vitesses brut déterminé et mémorisé lors de la détermination précédente.

6. Procédé selon une des revendications 1 à 5, caractérisé en ce qu'il consiste :
- à utiliser un signal électrique généré par un capteur de fréquence proportionnelle à la vitesse du véhicule,
- à incrémenter un compteur à l'aide des fronts montants et descendants de ce signal,
- à déterminer par un deuxième capteur (51) disposé sur la couronne du moteur les passages du moteur au point mort haut (PMH) ;
- à prélever la valeur du compteur à chaque passage au point mort haut ;
- à mémoriser la valeur ainsi prélevée ;
- à réitérer les opérations précédentes ; et
- à déterminer le rapport (VSN) de la vitesse du véhicule sur le régime du moteur comme étant la différence entre la valeur prélevée lors de la dernière itération et la valeur mémorisée à un certain nombre de points morts hauts précédents.

## Claims

1. A process for determining the gear box ratio of a vehicle consisting of:
- determining a value (VSN) representing the ratio of the speed of the vehicle to the engine speed;
- comparing the value (VSN) thus obtained to pairs of limiting values (BVN min) for the minimum value and (BVN max) for the maximum value, each associated with a value N of gear box ratio in order to determine the gross gear box ratio used (BVB);
- determining the theoretical gear box ratio (BVTH) by checking that the gross gear box ratio (BVB) determined at a preceding stage does not change in value during a programmed interval of time; and
- determining the probable gear box ratio (BVP) by taking as a value that of the theoretical value (BVTH) when this is determined and unvarying during the programmed time, or the minimum value of (BVB0) and the theoretical value (BVTH0) increased by one unit, that is, (BVTH0 + 1).

2. A process according to Claim 1, characterised in that it comprises a stage of storing the last value of the theoretical gear box value (BVTH0).

3. A process according to Claim 1, characterised in that the programmed interval of time corresponds to a first interval (tempo-BVPL) representing a delay time corresponding to the position of the butterfly valve when the foot is raised.

4. A process according to Claim 1, characterised in that the programmed interval of time corresponds to a second interval (tempo-BVUT) which represents a delay time corresponding to the position of the butterfly valve when the foot is not raised.

5. A process according to Claim 1, characterised in that the value (BVB0) corresponds to the value of the gross gear box ratio determined and stored at the time of the preceding determination.

6. A process according to one of Claims 1 to 5, characterised in that it consists of:
- using an electric signal generated by a frequency sensor proportional to the speed of the vehicle,
- incrementing a counter using the rising and falling edges of this signal,
- determining via a second counter (51) arranged on the crown wheel of the engine the moments when the engine passes through top dead centre (PMH);
- reading off the value of the counter each time top dead centre is passed through;
- storing the value thus read off;
- repeating the preceding operations; and
- determining the ratio (VSN) of the speed of the vehicle to the engine speed as being the difference between the value read off the last time the operation was carried out and the value stored for a certain number of preceding top dead centres.

## Patentansprüche

1. Verfahren zur Bestimmung des Getriebeübersetzungsverhältnisses eines Fahrzeugs, mit den Schritten:
- Bestimmung eines Wertes (VSN), der das Verhältnis der Fahrzeuggeschwindigkeit zur Motordrehzahl angibt,
- Vergleich des so erhaltenen Wertes (VSN) mit Grenzwertpaaren (min BVN) für den Minimalwert und (max BVN) für den Maximalwert, die jeweils einem Wert N des Getriebeübersetzungsverhältnisses zugeordnet sind, um das tatsächliche Getriebegesamtübersetzungsverhältnis (BVB) zu bestimmen,
- Bestimmung des theoretischen Getriebeübersetzungsverhältnisses (BVTH), indem überprüft wird, ob das in einem vorherigen Schritt bestimmte Getriebegesamtübersetzungsverhältnis (BVB) während eines programmierten Zeitintervalls nicht seinen Wert ändert, und
- Bestimmung des wahrscheinlichen Getriebeübersetzungsverhältnisses (BVP), indem als Wert der des theoretischen Verhältnisses (BVTH) gesetzt wird, wenn dieses bestimmt ist und während des programmierten Zeitintervalls unverändert ist, oder der Minimalwert von (BVBO) und des theoretischen Wertes (BVTHO), der um eine Einheit erhöht wird, d. h. (BVBO + 1).

2. Verfahren nach Anspruch 1,
dadurch gekennzeichnet, daß es einen Schritt des Speicherns des letzten Wertes des theoretischen Getriebeübersetzungsverhältnisses (BVTHO) umfaßt.

3. Verfahren nach Anspruch 1,
dadurch gekennzeichnet, daß das programmierte Zeitintervall einem ersten Intervall (Verzög-BVPL) entspricht, das eine Verzögerung ausdrückt, die der Stellung der Drosselklappe bei angehobenem Fuß entspricht.

4. Verfahren nach Anspruch 1,
dadurch gekennzeichnet, daß das programmierte Zeitintervall einem zweiten Intervall (Verzög-BVUT) entspricht, das eine Verzögerung ausdrückt, die der Stellung der Drosselklappe bei niedergedrücktem Fuß entspricht.

5. Verfahren nach Anspruch 1,
dadurch gekennzeichnet, daß der Wert (BVBO) dem Wert des Getriebegesamtübersetzungsverhältnisses entspricht, das bei der vorherigen Bestimmung bestimmt und gespeichert wurde.

6. Verfahren nach einem der Ansprüche 1 bis 5,
dadurch gekennzeichnet, daß es darin besteht,
- ein von einem Sensor erzeugtes elektrisches Signal zu verwenden, dessen Frequenz proportional zur Geschwindigkeit des Fahrzeugs ist,
- einen Zähler mittels der ansteigenden und abfallenden Flanken dieses Signals zu inkrementieren,
- mittels eines zweiten, auf dem Antriebskegelrad angeordneten Sensors (51) die Durchgänge des Motors durch den oberen Totpunkt (PMH) zu bestimmen,
- den Wert des Zählers bei jedem Durchgang durch den oberen Totpunkt aufzunehmen,
- den so aufgenommenen Wert zu speichern,
- die vorherigen Schritte zu wiederholen, und
- das Verhältnis (VSN) der Fahrzeuggeschwindigkeit zur Motordrehzahl als die Differenz zwischen dem bei der letzten Wiederholung aufgenommenen Wert und dem bei einer bestimmten Anzahl von vorherigen oberen Totpunkten gespeicherten Wert zu bestimmen.
